# FASCICULE DE BREVET EUROPEEN

(11) **EP 4 098 498 B1**
(45) Date de publication et mention de la délivrance du brevet: **31.07.2024**
(21) Numéro de dépôt: 22176857.5
(22) Date de dépôt: 01.06.2022
(51) Int. Cl.: B60T 7/20, B60T 13/08, B62D 53/08

(54) **DISPOSITIF D'ACCROCHAGE D'UNE REMORQUE À UN VÉHICULE TRACTEUR POURVU D'UNE STRUCTURE DE LIAISON ARTICULÉ**
VORRICHTUNG ZUM ANHÄNGEN EINES ANHÄNGERS AN EIN MIT EINER GELENKVERBINDUNGSSTRUKTUR VERSEHENES ZUGFAHRZEUG
DEVICE FOR COUPLING A TRAILER TO A TRACTOR VEHICLE PROVIDED WITH A STRUCTURE WITH HINGED CONNECTION

(30) Priorité: 02.06.2021 FR 2105792
(43) Date de publication de la demande: 07.12.2022
(73) Titulaire: Renault s.a.s, 92100 Boulogne Billancourt (FR)
(72) Inventeur: GIRARDI, Lionel, 78288 GUYANCOURT (FR); Rollet, Rémi, 78084 GUYANCOURT CEDEX (FR)

(56) Documents cités:
- WO-A1-00/74959
- GB-A- 1 440 577

## Description

L'invention a pour objet un dispositif d'accrochage d'une remorque à un véhicule tracteur, notamment équipé d'une structure de liaison articulée.

Des exemples de dispositifs d'accrochage sont connus des documents GB 1 440 577 A et WO 00/74959 A1.

La liaison entre un véhicule tracteur (véhicule particulier ou camion) et une remorque est généralement réalisée de deux manières : par une rotule solidaire du véhicule tracteur sur laquelle vient se fixer un timon d'attelage de la remorque ou par une platine solidaire de la remorque montée à pivot sur une sellette montée sur le véhicule tracteur.

Les remorques reliées au véhicule par un ensemble rotule - timon d'attelage sont généralement équipées d'un frein inertiel actionné par une course du timon d'attelage suivant la direction longitudinale du véhicule, cette course résultant d'un mouvement relatif du timon d'attelage et de la remorque lors du freinage du véhicule. Ce type de liaison présente toutefois l'inconvénient de permettre une rotation du timon d'attelage autour de cette direction longitudinale de sorte que l'on ne peut pas utiliser le centre de gravité bas du véhicule tracteur pour lutter contre le retournement de la remorque en virage.

Dans le cas des liaisons platine-sellette, la platine est montée pivotante sur la sellette autour d'un axe vertical et la sellette peut pivoter autour d'un axe transversal, mais les mouvements de rotation autour de la direction longitudinale sont interdits, ce qui permet de lutter contre le retournement de la remorque en virage. Par contre, ces systèmes de liaison interdisant tout mouvement de translation longitudinale nécessitent le recours à des systèmes de freinage complexes, généralement pneumatiques.

Il existe donc un besoin pour la réalisation d'un dispositif d'accrochage d'une remorque à un véhicule tracteur qui autorise un mouvement de translation et rende possible l'actionnement d'un frein inertiel, tout en luttant contre le retournement de la remorque en virage, et qui soit simple à réaliser.

A cet effet, l'invention concerne un dispositif d'accrochage d'une remorque à un véhicule tracteur, comprenant une platine d'attelage équipée d'un pivot s'étendant perpendiculairement à la platine et destiné à coopérer de façon réversible avec un dispositif d'attelage conjugué du véhicule tracteur, caractérisé en ce qu'il comprend une structure articulée destinée à relier la platine à un châssis de remorque, la structure de liaison articulée comprenant deux biellettes, chaque biellette étant pourvue d'une paire d'articulations d'axes de rotation perpendiculaires à la platine : une première articulation montée sur la platine et une deuxième articulation destinée à être montée sur le châssis de remorque, la structure de liaison articulée définissant un parallélogramme de Watt autorisant un déplacement du pivot selon une trajectoire sensiblement rectiligne et longitudinale par rapport au châssis de remorque lorsque le dispositif d'accrochage est monté sur ce dernier.

Par cet agencement, il est ainsi possible de déplacer le pivot de manière sensiblement rectiligne et longitudinale, autorisant l'utilisation du dispositif d'accrochage pour actionner un système de freinage inertiel. Par ailleurs, ce type de platine d'attelage est destiné à coopérer avec une sellette par insertion du pivot de la platine dans un orifice de réception correspondant de la sellette. Ce type de liaison interdit ainsi tout mouvement de rotation autour d'un axe longitudinal, favorisant la résistance au retournement en virage de la remorque équipée du dispositif d'accrochage selon l'invention.

Le dispositif d'accrochage selon l'invention présente en outre l'avantage d'être simple de réalisation et de montage, et peu coûteux.

Avantageusement, la structure de liaison articulée peut être constituée uniquement des deux biellettes.

Avantageusement, au moins l'une parmi les première et deuxième articulations de chaque biellette peut être une articulation à roulement, par exemple un roulement à billes ou à aiguilles. Ceci permet de réduire et/ou d'éliminer tout risque de rotation de la platine autour d'un axe longitudinal du châssis lorsque le dispositif d'accrochage est monté sur ce dernier. Les autres articulations peuvent alors être des articulations élastiques, toutefois, dans un mode de réalisation préféré, les deux articulations de chaque biellette sont des articulations à roulement. Le dispositif d'accrochage présente alors l'avantage d'être sans jeu, très peu frottant et très rigide en maintien de la rotation longitudinale.

Avantageusement, les premières articulations de chaque biellette peuvent être reliées à la platine en des positions situées dans un plan défini par la platine à proximité d'une droite passant par le pivot, notamment le centre de celui-ci, et destinée à s'étendre selon une direction longitudinale du châssis de remorque lorsque le dispositif d'accrochage est monté sur ce dernier.

Afin de faciliter le montage du dispositif d'accrochage sur un châssis de remorque, les biellettes peuvent être montées sur la platine d'un côté opposé au pivot, par exemple sur une face supérieure de la platine lorsque le dispositif d'accrochage est monté sur le châssis de remorque.

Avantageusement, afin de limiter des mouvements d'oscillation de la platine par rapport au châssis lorsque le dispositif d'accrochage est monté dans celui-ci, on pourra prévoir un amortisseur monté sur la platine d'une part, notamment du même côté que la structure de liaison articulée, et d'autre part destiné à être monté sur le châssis de remorque.

Avantageusement, afin de permettre l'utilisation du dispositif d'accrochage sur une remorque équipée d'un système de freinage inertiel, la deuxième articulation de l'une des biellettes peut être située à distance des extrémités de la biellette, la première articulation étant située à l'une de ces extrémités et l'autre extrémité de la biellette comportant un élément de fixation de câble destiné à la fixation d'un câble d'actionnement d'un système de freinage inertiel. On comprend ainsi qu'en cas de freinage du véhicule de traction, la platine d'attelage se déplace par rapport au châssis de remorque vers l'arrière grâce à la structure de liaison articulée, le pivot se déplaçant également vers l'arrière suivant une trajectoire sensiblement rectiligne alors que l'extrémité de la biellette équipée de l'élément de fixation de câble est déplacée vers l'avant du châssis de remorque assurant ainsi une traction d'un câble d'actionnement d'un système de freinage inertiel. Ce type de câble s'étend en général vers l'arrière du châssis de remorque. Typiquement, l'élément de fixation de câble peut être conçu pour interdire tout mouvement de translation relatif entre le câble et la biellette dont il est solidaire. On conserve une liaison rotule, pour que le câble ne travaille pas en flexion, ou au moins une liaison pivot, comme sur une poignée de frein de vélo. Cet élément de fixation de câble pourra notamment permettre une fixation amovible du câble pour faciliter son remplacement.

L'invention concerne également un châssis de remorque de véhicule automobile, caractérisé en ce qu'il est équipé d'un dispositif d'accrochage selon l'invention, positionné de sorte que la trajectoire de déplacement du pivot s'étende suivant une direction sensiblement longitudinale du châssis.

Lorsque l'une des biellettes du dispositif d'accrochage selon l'invention présente un élément de fixation de câble tel que déjà décrit, le châssis peut en outre comprendre un système de freinage inertiel actionné par un câble et le câble peut être fixé à l'élément de fixation de câble du dispositif d'accrochage. Avantageusement, lorsque les biellettes du dispositif d'accrochage, et optionnellement l'amortisseur, sont montées sur la platine d'un côté opposé au pivot, la structure de liaison articulée, et notamment ses biellettes, peut être positionnée entre des éléments de structure formant le châssis, dans l'épaisseur de ce dernier. On obtient ainsi un dispositif d'accrochage monté de manière compacte verticalement.

Enfin, l'invention a pour objet une remorque de véhicule automobile équipée d'un châssis selon l'invention.

L'invention est maintenant décrite en référence aux dessins annexés, non limitatifs, dans lesquels :
[Fig. 1] La figure 1 représente une vue de dessous d'un châssis de remorque équipé d'un dispositif d'accrochage selon un mode de réalisation de l'invention.
[Fig. 2] La figure 2 représente une vue de dessus du châssis de remorque et du dispositif d'accrochage de la figure 1.
[Fig. 3] La figure 3 représente une vue en perspective de dessus d'un dispositif d'accrochage selon un autre mode de réalisation.
[Fig. 4] la figure 4 représente une vue de dessus du dispositif d'accrochage de la figure 3.
[Fig. 5] La figure 5 est une représentation schématique vue de dessus d'un dispositif d'accrochage selon un autre mode de réalisation.

Dans la présente description, les termes avant, arrière, supérieur, inférieur, font référence aux directions avant et arrière d'une remorque et de son châssis, lorsque le dispositif d'accrochage est monté sur le châssis. Les axes X, Y, Z, correspondent respectivement à l'axe longitudinal (d'avant en arrière), transversal et vertical de la remorque (et de son châssis), celle-ci reposant sur le sol. La direction verticale correspond ainsi à la direction de la gravité.

Par sensiblement horizontal, longitudinal ou vertical, on entend une direction/un plan formant un angle d'au plus ±20°, voire d'au plus ±10° ou d'au plus ±5°, avec une direction/un plan horizontal, longitudinal ou vertical.

Par sensiblement parallèle, perpendiculaire ou à angle droit, on entend une direction/un angle s'écartant d'au plus ±20°, voire d'au plus ±10° ou d'au plus ±5° d'une direction/d'un plan parallèle, perpendiculaire ou d'un angle droit.

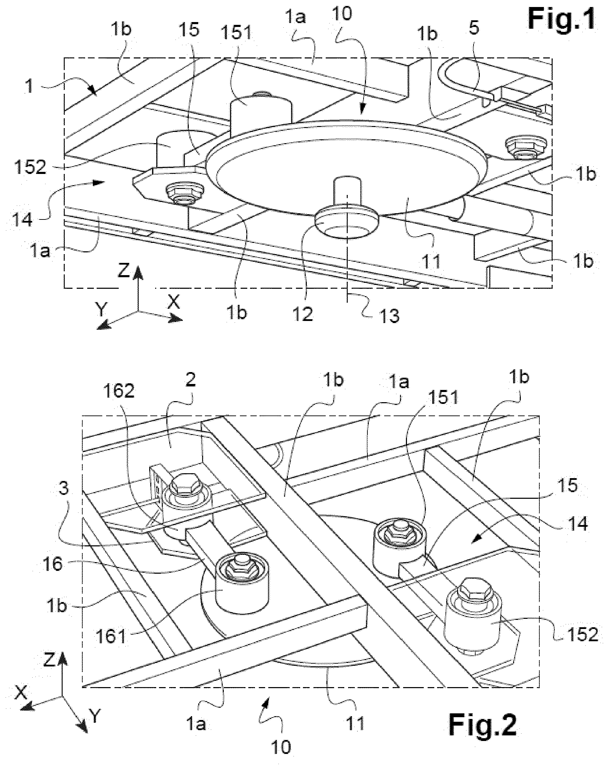

La figure 1 représente un châssis 1 d'une remorque destinée à être accrochée à un véhicule tracteur au moyen d'un dispositif d'accrochage 10 selon l'invention. Le châssis 1 est ici formé d'un assemblage d'éléments de structure longitudinaux 1a et transversaux 1b solidaires les uns des autres, par exemple des barres soudées les unes aux autres.

Le dispositif d'accrochage 10 comprend une platine 11 d'attelage équipée d'un pivot 12 s'étendant perpendiculairement à la platine 11 et destiné à coopérer de façon réversible avec un dispositif d'attelage conjugué du véhicule tracteur. Typiquement, le dispositif d'attelage conjugué du véhicule tracteur est une sellette montée articulée au véhicule tracteur autour d'un axe transversal. Cette sellette présente une face plane percée d'un orifice traversant d'axe vertical lorsque cette face s'étend horizontalement. Cet orifice est conformé pour recevoir à rotation le pivot 12 du dispositif d'accrochage 10 de la présente invention, autorisant une rotation du pivot 12 par rapport à la sellette autour d'un axe 13 perpendiculaire à la face plane de la sellette et au plan défini par la platine. Habituellement, le pivot 12 est situé du côté d'une face inférieure 11a de la platine qui vient ainsi reposer sur le dessus de la face plane de la sellette. La platine 11 est généralement une plaque plane en forme de forme circulaire, l'invention n'est toutefois pas limitée à une forme circulaire de la platine. Ce type de système d'accrochage est bien connu et ne sera pas décrit plus en détail.

Selon l'invention, la platine 11 est reliée au châssis 1 par une structure de liaison articulée 14 qui comprend deux biellettes 15, 16. Chaque biellette 15, 16 présente une paire d'articulations 151, 152 ; 161, 162 respectivement, d'axes de rotation perpendiculaires à la platine 11, plus précisément au plan défini par la platine. Une première articulation 151, 161 est montée sur la platine 11 et une deuxième articulation 152, 162 est montée sur le châssis 1 de remorque. Cette structure de liaison articulée 14 définit un parallélogramme de Watt autorisant un déplacement du pivot 12 selon une trajectoire sensiblement rectiligne et longitudinale par rapport au châssis 1 lorsque le dispositif d'accrochage 10 est monté sur ce dernier. Dit autrement, le pivot 12 peut suivre une trajectoire sensiblement rectiligne et longitudinale par rapport aux points fixes de la structure de liaison articulée 14, à savoir les points de liaison de cette dernière au châssis 1.

Par trajectoire sensiblement rectiligne, on entend une trajectoire rectiligne ou une trajectoire courbe à courbure constante ou variable présentant un rayon de courbure le plus grand possible. On pourra considérer que la trajectoire est sensiblement rectiligne et longitudinale lorsqu'elle ne s'écarte pas de plus de 5° d'un côté ou de l'autre d'une trajectoire rectiligne longitudinale du pivot depuis une position de repos du dispositif d'accrochage (remorque non tractée).

On notera que la trajectoire suivie par le pivot 12 est située dans le plan défini par la platine et peut engendrer une rotation de la platine 11 autour de son axe de rotation 13. Ceci n'est pas problématique lorsque le dispositif d'accrochage coopère avec la sellette puisque le pivot 12 est mobile en rotation par rapport à la sellette autour de cet axe de rotation 13.

On notera également qu'une telle trajectoire sensiblement rectiligne peut être obtenue pour différentes positions des biellettes par rapport à la platine et/ou pour différentes longueurs des biellettes.

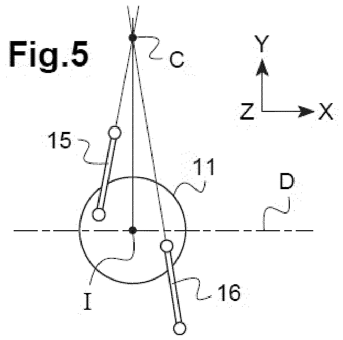

Ainsi, les biellettes pourront s'étendre suivant une direction transversale, tel que représenté sur les figures 1-4, ou non tel que représenté sur la figure 5. Cette figure 5 représente schématiquement la platine 11 et le centre I du pivot 12 par lequel passe l'axe 13 de rotation de celui-ci. La trajectoire suivie par le centre I correspond alors à un cercle de centre C, point de convergence des droites passant par les biellettes 15 et 16 dans une position au repos (sans traction exercée sur le dispositif d'accrochage et la remorque). On comprend ainsi que pour avoir une trajectoire la plus rectiligne possible, le rayon du cercle (distance IC) doit être le plus grand possible.

Il est cependant généralement préférable de positionner les premières articulations 151, 161 à proximité d'une droite D passant par le pivot 12 (par son centre I) et destinée à s'étendre selon la direction longitudinale de la remorque lorsque le dispositif d'accrochage est monté sur le châssis de la remorque, tel que représenté sur l'ensemble des figures. Cela permet de maintenir le centre C précédemment défini très proche de la position longitudinale du point de pivot lors du débattement, et ainsi maintenir la trajectoire sensiblement longitudinale de ce pivot.

Le plus souvent, les biellettes seront situées par rapport à la platine de part et d'autre d'une ligne transversale passant par le centre I du pivot 12. La structure de liaison articulée 14 définissant un parallélogramme de Watt, les articulations 151 et 161 sont à même distance du pivot suivant la direction longitudinale (autrement dit, ces articulations sont équidistantes par rapport à une droite transversale passant par le pivot), voire symétriques par rapport au pivot, l'articulation de l'une des biellettes étant en avant du pivot, l'articulation de l'autre biellette étant en arrière du pivot pour garantir cette trajectoire sensiblement longitudinale.

Afin de faciliter le montage et la réalisation et afin de ne pas gêner la liaison entre le dispositif d'accrochage 10 de la présente invention et la sellette du véhicule tracteur avec laquelle il doit coopérer, les biellettes sont de préférence montées sur la platine 11 d'un côté opposé au pivot 12, typiquement sur la face supérieure 11b de la platine 11.

Les première et deuxième articulations de chaque biellette étant d'axes perpendiculaires au plan défini par la platine 11, les biellettes pourront s'étendre dans un plan parallèle au plan défini par la platine 11, notamment selon une direction rectiligne, facilitant leur réalisation et montage. L'invention n'est toutefois pas limitée à une forme particulière des biellettes.

Par exemple, tel que représenté sur la figure 2 pour l'articulation 162, une articulation de biellette peut être fixée au châssis 1 via deux pattes de support 2, 3 parallèles entre elles et perpendiculaires à l'axe de rotation de l'articulation considérée. Ce mode de fixation permet notamment de fixer ces articulations sans modifier la structure du châssis, les articulations s'étendant ici dans l'épaisseur (mesurée verticalement) du châssis et les pattes de support étant solidarisés, par exemple par soudage, aux éléments de structure du châssis. Ainsi, dans l'exemple, les biellettes, reliées à la face supérieure 11b de la platine 11, s'étendent entre les éléments de structure 1a, 1b dans l'épaisseur du châssis 1, de sorte qu'un montage très compact verticalement peut être obtenu malgré la présence de la structure de liaison articulée.

La structure de liaison articulée 14 pourra par ailleurs être conçue de manière à obtenir une longueur de déplacement du pivot suffisante pour l'actionnement d'un câble d'un système de freinage inertiel. Typiquement, cette longueur peut être de l'ordre de 100mm (±50mm par rapport à une position au repos dans laquelle le dispositif d'accrochage et la remorque ne sont soumis à aucune traction).

Les articulations des biellettes peuvent être des articulations élastiques. Toutefois on préférera prévoir au moins une articulation à roulement (à billes ou à aiguilles) pour chaque biellette. Par exemple, chaque biellette pourra présenter une articulation élastique et une articulation à roulement ou bien deux articulations à roulement. En effet, l'utilisation d'articulations élastiques pour les deux articulations d'une biellette est susceptible de permettre une légère rotation de la structure articulée 14, et par conséquent de la platine 11, autour d'un axe longitudinal par rapport au châssis, ce qui n'est pas souhaitable pour contrer un retournement de remorque en virage. Des articulations à roulement permettent de transmettre des couples importants en X, augmentant la rigidité du dispositif d'accrochage par rapport à des mouvements de rotation autour de la direction longitudinale X.

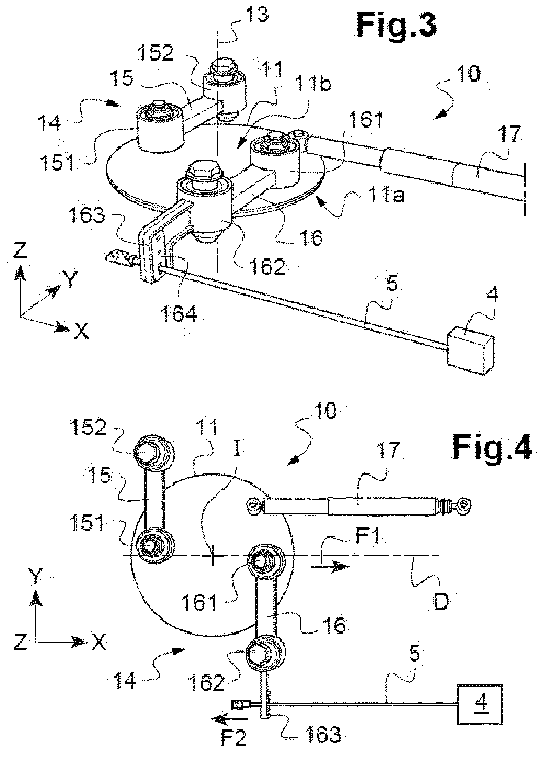

Enfin, le dispositif d'accrochage selon l'invention peut être utilisé pour commander un système de freinage inertiel 4. Ce type de système de freinage (représenté schématiquement sur les figures 3 et 4) est actionné de manière classique au moyen d'un câble 5 par un mouvement de traction sur celui-ci engendré par un déplacement inertiel de la remorque par rapport à la platine 11. En effet, lorsque le véhicule tracteur freine, la remorque a tendance à avancer en direction du véhicule par inertie suivant la direction longitudinale du châssis : un mouvement de translation étant autorisé au niveau de la liaison entre la platine 11 et le châssis grâce à la structure de liaison articulée 14, la platine 11 a alors tendance à se déplacer vers l'arrière de la remorque selon la direction longitudinale (flèche F1 de la figure 4). Ce mouvement peut alors être utilisé pour actionner le câble.

A cet effet, on pourra par exemple prévoir un élément de fixation de câble 164 à l'extrémité 163 de l'une des biellettes, ici la biellette 16, l'autre extrémité de la biellette 16 supportant la première articulation 161. Ainsi, la deuxième articulation 162 est située entre l'extrémité 163 et la première articulation 161. Dès lors, un déplacement de la platine 11, et donc de son pivot 12, dans la direction générale de la flèche F1 (suivant la trajectoire sensiblement rectiligne mentionnée plus haut) engendre un déplacement de l'élément de fixation de câble 164 vers l'avant du châssis selon la direction de la flèche F2, et en conséquence une traction sur le câble 5.

Dans l'exemple, l'élément de fixation de câble 164 se présente sous la forme d'une plaque présentant un orifice pour le passage du câble et pourvue d'un dispositif de blocage en translation du câble. L'invention n'est bien entendu pas limitée à un mode de réalisation particulier de cet élément de fixation de câble et tout autre agencement permettant de bloquer un câble en translation pourra être utilisé.

Le dispositif d'accrochage peut en outre comprendre un amortisseur 17 monté, de préférence articulé, d'une part sur la platine 11 et d'autre part sur le châssis 1. Un tel amortisseur 17 est de préférence également monté sur la face supérieure 11b de la platine. Ceci peut permettre de limiter les mouvements oscillants du dispositif d'accrochage par rapport au châssis.

## Revendications

1. Dispositif d'accrochage (10) d'une remorque à un véhicule tracteur, comprenant une platine (11) d'attelage équipée d'un pivot (12) s'étendant perpendiculairement à la platine et destiné à coopérer de façon réversible avec un dispositif d'attelage conjugué du véhicule tracteur, une structure de liaison articulée (14) destinée à relier la platine (11) à un châssis (1) de remorque, la structure de liaison articulée (14) comprenant deux biellettes (15, 16), chaque biellette (15, 16) étant pourvue d'une paire d'articulations (151, 152 ; 161, 162) , une deuxième articulation (152, 162) de chaque paire d'articulations (151, 152; 161, 162) destinée à être montée sur le châssis (1) de remorque, la structure de liaison articulée (14) définissant un parallélogramme de Watt autorisant un déplacement du pivot (12) selon une trajectoire,
le dispositif d'accrochage (10) **caractérisé en ce que**
les articulations (151, 152, 161, 162) ont des axes de rotation perpendiculaires à la platine (11) et une première articulation (151, 161) de chaque paire d'articulations (151, 152; 161, 162) est montée sur la platine et **en ce que** la trajectoire du déplacement du pivot (12) est sensiblement rectiligne et longitudinale par rapport au châssis (1) de remorque lorsque le dispositif d'accrochage (10) est monté sur ce dernier.

2. Dispositif d'accrochage (10) selon la revendication 1, **caractérisé en ce qu'**au moins l'une parmi les première et deuxième articulations de chaque biellette est une articulation à roulement.

3. Dispositif d'accrochage (10) selon la revendication 1 ou 2, **caractérisé en ce que** les premières articulations (151, 161) de chaque biellette sont reliées à la platine en des positions situées dans un plan défini par la platine à proximité d'une droite passant par le pivot (12) et destinée à s'étendre selon une direction longitudinale lorsque le dispositif d'accrochage est monté sur le châssis de la remorque.

4. Dispositif d'accrochage (10) selon l'une quelconque des revendications 1 à 3, **caractérisé en ce que** les biellettes (15, 16) sont montées sur la platine d'un côté (11b) opposé au pivot (12).

5. Dispositif d'accrochage (10) selon l'une quelconque des revendications 1 à 4, **caractérisé en ce qu'**il comprend un amortisseur (17) monté sur la platine (11) d'une part, et d'autre part destiné à être monté sur le châssis de remorque.

6. Dispositif d'accrochage (10) selon l'une quelconque des revendications 1 à 5, **caractérisé en ce que** la deuxième articulation (162) de l'une des biellettes est située à distance des extrémités de la biellette (16), la première articulation (161) étant située à l'une de ces extrémités et l'autre extrémité (163) de la biellette comportant un élément de fixation de câble (164) destiné à la fixation d'un câble (5) d'actionnement d'un système de freinage inertiel.

7. Châssis (1) de remorque de véhicule automobile, **caractérisé en ce qu'**il est équipé d'un dispositif d'accrochage (10) selon l'une quelconque des revendications 1 à 6, positionné de sorte que la trajectoire de déplacement du pivot s'étende suivant une direction sensiblement longitudinale du châssis.

8. Châssis (1) de remorque selon la revendication 7 lorsqu'elle dépend de la revendication 6, **caractérisé en ce qu'**il comprend un système de freinage inertiel (4) actionné par un câble (5) et **en ce que** le câble (5) est fixé à l'élément de fixation de câble (164) du dispositif d'accrochage.

9. Châssis (1) de remorque selon la revendication 7 ou 8, dans lequel les biellettes (15, 16) du dispositif d'accrochage (10) sont montées sur la platine (11) d'un côté opposé au pivot (12) et sont positionnées entre des éléments de structure (1a, 1b) formant le châssis, dans l'épaisseur de ce dernier.

10. Remorque de véhicule automobile comportant un châssis selon l'une des revendications 7 à 9.

## Patentansprüche

1. Vorrichtung zum Anhängen (10) eines Anhängers an ein Zugfahrzeug, umfassend eine Kupplungsplatte (11), die mit einem Drehzapfen (12) ausgestattet ist, der sich senkrecht zu der Platte erstreckt und dazu bestimmt ist, mit einer entsprechenden Kupplungsvorrichtung des Zugfahrzeugs reversibel zusammenzuwirken, eine Gelenkverbindungsstruktur (14), die dazu bestimmt ist, die Platte (11) mit einem Anhängerfahrgestell (1) zu verbinden, wobei die Gelenkverbindungsstruktur (14) zwei Schwingarme (15, 16) umfasst, wobei jeder Schwingarm (15, 16) mit einem Gelenkpaar (151, 152; 161, 162) versehen ist, wobei ein zweites Gelenk (152, 162) jedes Gelenkpaares (151, 152; 161, 162) dazu bestimmt ist, am Anhängerfahrgestell (1) angebracht zu werden, wobei die Gelenkverbindungsstruktur (14) ein Watt-Parallelogramm definiert, das eine Bewegung des Drehzapfens (12) entlang einer Trajektorie ermöglicht, wobei die Vorrichtung zum Anhängen (10) **dadurch gekennzeichnet ist, dass** die Gelenke (151, 152, 161, 162) Drehachsen aufweisen, die zu der Platte (11) senkrecht sind, und ein erstes Gelenk (151, 161) jedes Gelenkpaares (151, 152; 161, 162) auf der Platte angebracht ist, und dadurch, dass die Trajektorie der Bewegung des Drehzapfens (12) im Wesentlichen gerade ist und bezüglich des Anhängerfahrgestells (1) in Längsrichtung verläuft, wenn die Vorrichtung zum Anhängen (10) an diesem Letzteren angebracht ist.

2. Vorrichtung zum Anhängen (10) nach Anspruch 1, **dadurch gekennzeichnet, dass** mindestens eines von dem ersten und dem zweiten Gelenk jedes Schwingarmes ein Wälzgelenk ist.

3. Vorrichtung zum Anhängen (10) nach Anspruch 1 oder 2, **dadurch gekennzeichnet, dass** die ersten Gelenke (151, 161) jedes Schwingarmes mit der Platte an Positionen verbunden sind, die sich in einer durch die Platte definierten Ebene in der Nähe einer Geraden befinden, welche durch den Drehzapfen (12) verläuft und dazu bestimmt ist, sich entlang einer Längsrichtung zu erstrecken, wenn die Vorrichtung zum Anhängen am Fahrgestell des Anhängers angebracht ist.

4. Vorrichtung zum Anhängen (10) nach einem der Ansprüche 1 bis 3, **dadurch gekennzeichnet, dass** die Schwingarme (15, 16) an der Platte auf einer dem Drehzapfen (12) gegenüberliegenden Seite (11b) angebracht sind.

5. Vorrichtung zum Anhängen (10) nach einem der Ansprüche 1 bis 4, **dadurch gekennzeichnet, dass** sie einen Stoßdämpfer (17) umfasst, der einerseits an der Platte (11) angebracht ist und andererseits dazu bestimmt ist, am Anhängerfahrgestell angebracht zu werden.

6. Vorrichtung zum Anhängen (10) nach einem der Ansprüche 1 bis 5, **dadurch gekennzeichnet, dass** das zweite Gelenk (162) eines der Schwingarme sich in einem Abstand von den Enden des Schwingarmes (16) befindet, wobei das erste Gelenk (161) sich an einem dieser Enden befindet und das andere Ende (163) des Schwingarmes ein Seilbefestigungselement (164) aufweist, das zur Befestigung eines Betätigungsseils (5) eines Auflaufbremssystems bestimmt ist.

7. Anhängerfahrgestell (1) eines Kraftfahrzeugs, **dadurch gekennzeichnet, dass** es mit einer Vorrichtung zum Anhängen (10) nach einem der Ansprüche 1 bis 6 ausgestattet ist, die derart positioniert ist, dass sich die Bewegungstrajektorie des Drehzapfens im Wesentlichen in einer Längsrichtung des Fahrgestells erstreckt.

8. Anhängerfahrgestell (1) nach Anspruch 7, wenn abhängig von Anspruch 6, **dadurch gekennzeichnet, dass** es ein durch ein Seil (5) betätigtes Auflaufbremssystem (4) umfasst, und dadurch, dass das Seil (5) an dem Seilbefestigungselement (164) der Vorrichtung zum Anhängen befestigt ist.

9. Anhängerfahrgestell (1) nach Anspruch 7 oder 8, wobei die Schwingarme (15, 16) der Vorrichtung zum Anhängen (10) an der Platte (11) auf einer dem Drehzapfen (12) gegenüberliegenden Seite angebracht sind und zwischen Strukturelementen (1a, 1b) positioniert sind, die das Fahrgestell bilden, in der Dicke dieses Letzteren.

10. Kraftfahrzeuganhänger, welcher ein Fahrgestell nach einem der Ansprüche 7 bis 9 aufweist.

## Claims

1. Coupling device (10) for coupling a trailer to a towing vehicle, comprising a hitching plate (11) equipped with a kingpin (12) extending perpendicular to the plate and intended to engage reversibly with a mating hitching device belonging to the towing vehicle, an articulated-connection structure (14) intended to connect the plate (11) to a trailer chassis (1), the articulated-connection structure (14) comprising two connecting rods (15, 16), each connecting rod (15, 16) being provided with a pair of articulations (151, 152; 161, 162), a second articulation (152, 162) of each pair of articulations (151, 152; 161, 162) being intended to be mounted on the trailer chassis (1), the articulated-connection structure (14) defining a Watt parallel-motion linkage allowing the kingpin (12) to move along a path, the coupling device (10) being **characterized in that** the articulations (151, 152, 161, 162) have axes of rotation perpendicular to the plate (11) and a first articulation (151, 161) of each pair of articulations (151, 152; 161, 162) is mounted on the plate, and **in that** the path along which the kingpin (12) moves is substantially rectilinear and longitudinal with respect to the trailer chassis (1) when the coupling device (10) is mounted on said chassis.

2. Coupling device (10) according to Claim 1, **characterized in that** of the first and second articulations of each connecting rod at least one comprises a rolling bearing.

3. Coupling device (10) according to Claim 1 or 2, **characterized in that** the first articulations (151, 161) of each connecting rod are connected to the plate at positions situated in a plane defined by the plate near to a straight line which passes through the kingpin (12) and is intended to extend in a longitudinal direction when the coupling device is mounted on the chassis of the trailer.

4. Coupling device (10) according to any one of Claims 1 to 3, **characterized in that** the connecting rods (15, 16) are mounted on the plate on an opposite side (11b) to the kingpin (12).

5. Coupling device (10) according to any one of Claims 1 to 4, **characterized in that** it comprises a damper (17) mounted on the plate (11) on the one hand, and on the other hand intended to be mounted on the trailer chassis.

6. Coupling device (10) according to any one of Claims 1 to 5, **characterized in that** the second articulation (162) of one of the connecting rods is situated some distance from the ends of the connecting rod (16), the first articulation (161) being situated at one of these ends and the other end (163) of the connecting rod comprising a cable-attachment element (164) intended for attaching a cable (5) for actuating an inertial braking system.

7. Motor vehicle trailer chassis (1), **characterized in that** it is equipped with a coupling device (10) according to any one of Claims 1 to 6, positioned in such a way that the path along which the kingpin moves extends in a substantially longitudinal direction of the chassis.

8. Trailer chassis (1) according to Claim 7 when dependent on Claim 6, **characterized in that** it comprises an inertial braking system (4) actuated by a cable (5), and **in that** the cable (5) is attached to the cable-attachment element (164) of the coupling device.

9. Trailer chassis (1) according to Claim 7 or 8, wherein the connecting rods (15, 16) of the coupling device (10) are mounted on the plate (11) on an opposite side to the kingpin (12) and are positioned between structural elements (1a, 1b) that make up the chassis, within the thickness of this chassis.

10. Motor vehicle trailer comprising a chassis according to one of Claims 7 to 9.
